# DEMANDE DE BREVET EUROPEEN

(11) **EP 1 619 096 A1**
(43) Date de publication de la demande: **25.01.2006**
(21) Numéro de dépôt: 05300589.8
(22) Date de dépôt: 13.07.2005
(51) Int. Cl.: B60S 1/34

(54) **Dispositif d'inclinaison de la lame d'un balai d'essuie-glace de véhicule automobile**

(30) Priorité: 19.07.2004 FR 0451569
(71) Demandeur: Peugeot Citroen Automobiles SA, 78140 Vélizy Villacoublay (FR)
(72) Inventeur: Jeuffe, Gérard, 78810 Feucherolles (FR)

(57) **Abrégé**

Dispositif pour l'inclinaison de la lame souple d'un balai d'essuie-glace en appui permanent sur la surface d'un pare-brise ou autre surface vitrée d'un véhicule automobile, comportant un bras supportant la lame, solidarisé d'un socle (8) monté pivotant autour d'un axe de rotation porté par un élément de liaison (11) avec un ensemble d'entraînement du bras par rapport à la vitre, caractérisé en ce que le socle (8) est constitué par une chape comprenant d'une part un palier de support (10) de l'axe, autorisant sa libre rotation autour de celui-ci, et d'autre part deux faces latérales (19,20), deux ressorts (23,24) identiques l'un à l'autre, étant respectivement disposés entre l'élément de liaison et les faces latérales, ces ressorts étant tels que l'un travaille en compression et l'autre en extension ou inversement selon le sens de déplacement du balai (1).

## Description

La présente invention est relative un dispositif qui assure automatiquement l'inclinaison de la lame souple d'un balai d'essuie-glace vis-à-vis du plan tangent à la vitre, plane ou plus généralement bombée vers l'extérieur, d'un pare-brise de véhicule automobile, au droit du contact de l'arête de cette lame avec la surface de cette vitre, ce dispositif étant plus particulièrement applicable dans le cas où le mouvement du balai s'effectue perpendiculairement au plan de la lame, selon un déplacement linéaire par rapport à la vitre du pare-brise et non de manière oscillante, en rotation alternée autour d'un axe de commande portant le balai.

Dans le cas en effet d'un mécanisme d'essuie-glace à balayage linéaire alternatif, où la lame du balai se déplace transversalement contre la vitre du pare-brise en étant généralement commandée au moyen d'une vis sans fin entraînée par un moteur réversible dont le sens de rotation s'inverse lorsque le balai atteint l'une ou l'autre des extrémités à droite ou à gauche du pare-brise, ce balai étant solidaire d'une noix filetée en prise avec la vis et portée par un chariot ou support analogue, ce chariot étant de plus associé à un mécanisme qui permet un déplacement complémentaire du balai perpendiculairement à l'axe de la vis pour accommoder le profil bombé de la vitre d'un bord à l'autre de celle-ci, il est indispensable que la lame souple du balai soit en permanence légèrement inclinée par rapport à la surface de cette vitre afin d'assurer un raclage efficace de l'eau sur celle-ci et éviter qu'elle ne « broute » au cours de ses déplacements si le frottement est trop important.

Notamment, il convient que le plan de la lame du balai fasse avec le plan tangent à la vitre selon la génératrice de contact de cette dernière avec l'arête de la lame qui porte sur elle, un angle un peu inférieur à 90°, du côté défini par la direction de déplacement du balai.

Il s'avère de plus indispensable que, lorsque la lame du balai atteint sa fin de course sur la vis d'entraînement, à droite ou à gauche, au moment où le moteur qui entraîne cette vis inverse son sens de rotation, cette inclinaison s'inverse également, la lame souple du balai prenant une orientation symétrique de la précédente vis-à-vis d'une position nominale où elle serait perpendiculaire au plan tangent précité.

La présente invention vise un dispositif mécanique très simple, monté entre le support du balai d'un essuie-glace à déplacement linéaire et son mécanisme de commande, qui permet de réaliser automatiquement le changement d'inclinaison souhaité et le maintien de la lame souple dans la position inclinée correspondante, aussitôt que s'inverse le sens de déplacement de ce balai par rapport à la vitre du pare-brise.

A cet effet, le dispositif considéré, pour un balai d'essuie-glace composé d'une lame souple en appui permanent sur la surface de la vitre d'un pare-brise d'un véhicule automobile et d'un bras supportant la lame, ce bras étant solidarisé d'un socle monté pivotant autour d'un axe de rotation porté par un élément de liaison avec un ensemble d'entraînement en déplacement linéaire transversal et alternatif du bras par rapport à la vitre, se caractérise en ce que le socle est constitué par une chape comprenant d'une part un palier de support de l'axe, autorisant sa libre rotation autour de celui-ci, et d'autre part deux faces latérales, s'étendant de part et d'autre de l'élément de liaison portant l'axe, deux ressorts identiques l'un à l'autre, étant respectivement disposés entre l'élément de liaison et les faces latérales de la chape du socle, ces ressorts étant aménagés de sorte que l'un travaille en compression et l'autre en extension ou inversement selon le sens de déplacement du balai, afin de provoquer un pivotement relatif du socle par rapport à l'élément de liaison et une inclinaison correspondante de la lame du balai par rapport à la vitre.

Selon une autre caractéristique, chacun des deux ressorts, de préférence du type ressort en spirale, est solidarisé à une extrémité d'une des faces de la chape et à l'autre d'un épaulement en regard de l'élément de liaison.

Avantageusement, l'épaulement de l'élément de liaison comporte extérieurement une plaquette d'un matériau souple, propre à s'appliquer sur une portée d'appui de la chape du socle, selon l'inclinaison relative de celui-ci par rapport à l'élément de liaison.

Selon une caractéristique complémentaire, l'axe de pivotement du socle par rapport à l'élément de liaison est constitué par une vis traversant le palier de support et immobilisée vis-à-vis de celui-ci par un écrou de blocage.

En variante, l'axe de pivotement du socle est monté dans une ouverture du palier de support et immobilisé dans celui-ci par encliquetage, en étant maintenu par un ressort plat à lame en appui contre le fond du socle.

Selon encore une autre caractéristique, le socle est muni d'un enjoliveur extérieur amovible, propre à protéger les deux ressorts provoquant l'inclinaison de la lame souple par rapport à la vitre.

D'autres caractéristiques d'un dispositif pour l'inclinaison automatique de la lame d'un balai d'essuie-glace à déplacement linéaire vis-à-vis de la surface d'un pare-brise ou autre surface vitrée d'un véhicule automobile, apparaîtront encore à travers la description qui suit d'un exemple de réalisation donné à titre indicatif et non limitatif, en référence aux dessins annexés, sur lesquels :
- La Figure 1 est une vue schématique en élévation d'un balai d'essuie-glace muni d'un dispositif conforme à l'invention.
- Les Figures 2, 3 et 4 sont des vues en coupe transversale, à plus grande échelle, des moyens mis en oeuvre selon l'invention pour assurer l'inclinaison du balai sur la vitre à essuyer, selon son sens de déplacement.
- Les Figures 5 et 6 sont des vues de détail à plus grande échelle, illustrant les moyens de liaison entre le balai d'essuie-glace et ses organes d'entraînement.

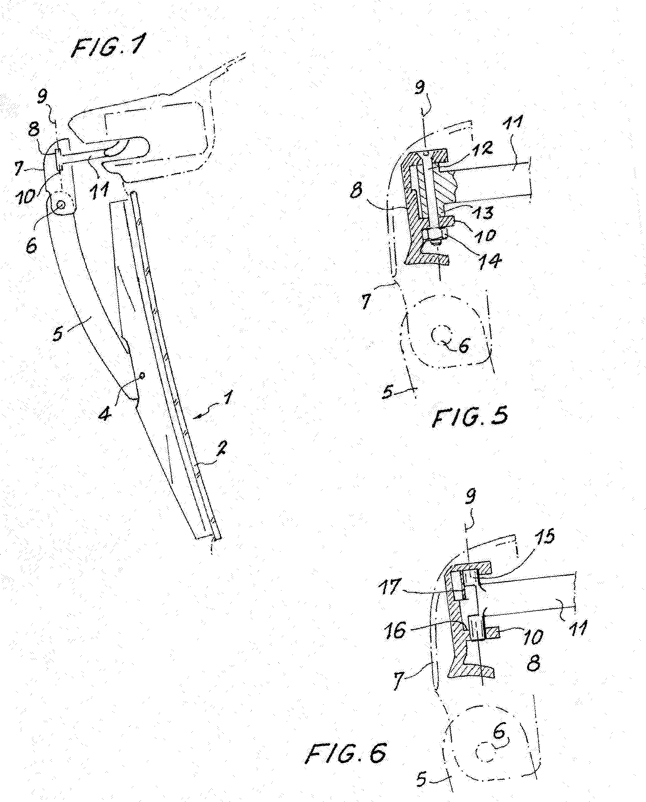

Sur la Figure 1, le balai d'essuie-glace représenté, désigné dans son ensemble sous la référence 1, comporte de manière en elle-même classique dans la technique, une lame souple 2, en caoutchouc ou autre matériau similaire, destinée à venir s'appliquer contre le pare-brise avant, la lunette arrière ou d'autres éléments vitrés d'un véhicule automobile (non représentés), cette lame souple étant portée par une armature à ressort 3 qui permet de l'appliquer en permanence contre la surface à balayer, laquelle peut être plane mais est le plus généralement bombée, le balai s'appuyant sur la vitre selon la génératrice de contact avec le plan tangent à la surface de celle-ci au droit de ce contact.

L'armature 3 est articulée autour d'un axe 4 sur un bras porteur 5, lui-même monté pivotant autour d'un autre axe 6 vis-à-vis d'un support 7 formant enjoliveur de protection et agencé de manière à permettre, comme il est classique dans ce genre de dispositif, d'écarter la lame 2 de la vitre, notamment pour en assurer l'entretien ou le remplacement.

Le support 7 du bras 5 comporte intérieurement un socle 8 qui en est solidaire, ce socle étant susceptible de pivoter autour de l'axe 9 d'un palier de support 10 dans lequel s'engage un élément de liaison 11 avec un mécanisme (non représenté) permettant d'assurer le déplacement linéaire de droite à gauche ou vice-versa du balai d'essuie-glace 1 vis-à-vis de la vitre sur laquelle s'applique la lame 2, le détail de la réalisation de ce mécanisme qui n'importe pas directement à l'invention, n'étant pas décrit ici.

Sur la Figure 5, on voit que le socle 8 pivote vis-à-vis de l'élément de liaison 11 dans le palier 10 autour de l'axe 9 par l'intermédiaire d'une vis verticale 12 qui traverse le palier et une noix 13 prévue en bout de l'élément 11, cette vis étant immobilisée en position par un écrou 14.

Sur la variante illustrée sur la Figure 6, l'élément de liaison 11 comporte deux extensions 15 dans le prolongement l'une de l'autre pour matérialiser l'axe de pivotement 9, qui est monté par encliquetage dans une ouverture 16 du palier 10 et maintenu par un ressort plat 17 à lame, conformé pour s'appuyer contre le fond du socle 8.

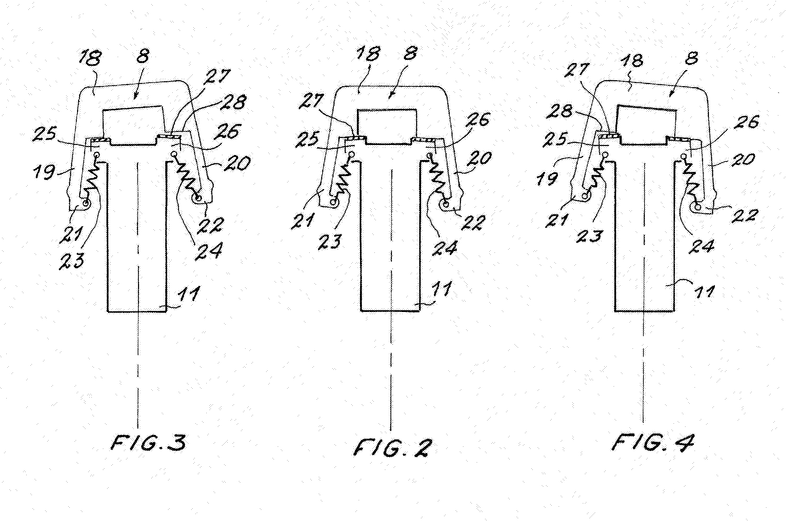

Les Figures 2 à 4 illustrent, à plus grande échelle, les moyens mis en oeuvre, conformément à l'invention, pour permettre le pivotement relatif du socle 8 portant le balai d'essuie-glace 1 vis-à-vis de l'élément de liaison 11, avec une inclinaison qui s'inverse selon le sens de déplacement de ce balai sur la vitre à nettoyer.

Sur la Figure 2, le socle 8 et l'élément 11 sont représentés dans une position dite nominale, où ils sont alignés l'un par rapport à l'autre, les Figures 3 et 4 illustrant, par référence à la Figure 2, l'inclinaison relative existant entre ces deux pièces selon que le balai se déplace de droite à gauche ou vice-versa.

Le socle 8, qui supporte le palier 10 de la façon décrite précédemment, se présente, vu en coupe, sous la forme d'une chape à profil en U, comprenant une partie centrale 18 et de part et d'autre de celle-ci, deux faces latérales, respectivement 19 et 20.

A leurs extrémités, les faces 19 et 20 de la chape comportent un retour, respectivement 21 et 22, sur lequel sont fixées, de chaque côté de l'élément de liaison 11, les extrémités de deux ressorts 23 et 24, les extrémités opposées de ces ressorts étant solidarisées de deux épaulements ménagés sur des extensions latérales 25 et 26 prévues en bout de cet élément de liaison 11 sur lequel la chape est articulée autour de l'axe 9.

Les ressorts 23 et 24 sont de préférence des ressorts en spirale et sont agencés de telle sorte que, comme illustré sur les Figures 3 et 4 respectivement, l'un de ces ressorts travaille en compression, tandis que l'autre est en extension, ou vice-versa, selon précisément le sens du pivotement relatif du socle 8 par rapport à l'élément de liaison 11, entraînant corrélativement l'inclinaison vers la droite ou vers la gauche sur la vitre, de la lame 2 du balai d'essuie-glace 1.

Dans un sens de déplacement du balai commandé par le mécanisme qui agit sur l'élément 11, ce balai est légèrement couché sur la vitre et forme avec celle-ci un angle un peu inférieur à 90°, cette inclinaison étant automatiquement inversée dès que le sens de déplacement du balai s'inverse lui-même.

Avantageusement, pour amortir le choc entre le socle 8 et l'élément de liaison 11 lorsque change leur inclinaison relative comme illustré sur les Figures 3 et 4, les extensions latérales 25 et 26 de l'élément 11 comportent chacune une plaquette extérieure 27 d'un matériau souple, du genre mousse de caoutchouc ou analogue, qui vient s'appliquer alternativement contre une portée correspondante en regard 28 de la partie centrale 18 de la chape formant le socle 8.

On réalise ainsi un dispositif d'une grande simplicité, permettant d'incliner automatiquement un balai d'essuie-glace vis-à-vis du plan tangent, elle-même plane ou bombée, de la surface contre laquelle s'appuie la lame souple de ce balai, évitant que celui-ci ne broute ou saute lors de son déplacement, avec un effet négatif et préjudiciable sur la qualité du nettoyage réalisé.

Bien entendu, il va de soi que l'invention ne se limite pas à l'exemple de réalisation plus spécialement décrit et représenté ; elle en embrasse au contraire toutes les variantes.

## Revendications

1. Dispositif pour assurer automatiquement l'inclinaison de la lame souple (2) d'un balai d'essuie-glace (1) en appui permanent sur la surface d'un pare-brise ou autre surface vitrée d'un véhicule automobile, comportant un bras (5) supportant la lame, solidarisé d'un socle (8) monté pivotant autour d'un axe de rotation (9) porté par un élément de liaison (11) avec un ensemble d'entraînement en déplacement linéaire transversal et alternatif du bras par rapport à la vitre, **caractérisé en ce que** le socle (8) est constitué par une chape comprenant d'une part un palier de support (10) de l'axe, autorisant sa libre rotation autour de celui-ci, et d'autre part deux faces latérales (19,20), s'étendant de part et d'autre de l'élément de liaison (11) portant l'axe, deux ressorts (23,24) identiques l'un à l'autre, étant respectivement disposés entre l'élément de liaison et les faces latérales de la chape du socle, ces ressorts étant aménagés de sorte que l'un travaille en compression et l'autre en extension ou inversement selon le sens de déplacement du balai (1), afin de provoquer un pivotement relatif du socle par rapport à l'élément de liaison et une inclinaison correspondante de la lame du balai par rapport à la vitre.

2. Dispositif selon la revendication 1, **caractérisé en ce que** chacun des deux ressorts (23,24), de préférence du type ressort en spirale, est solidarisé à une extrémité (21,22) d'une des faces (19,20) de la chape su socle (8) et à l'autre d'un épaulement en regard (25,26) de l'élément de liaison (11).

3. Dispositif selon la revendication 2, **caractérisé en ce que** l'épaulement (25,26) de l'élément de liaison (11) comporte extérieurement une plaquette (27) d'un matériau souple, propre à s'appliquer sur une portée d'appui (28) de la chape du socle (8), selon l'inclinaison relative de celui-ci par rapport à l'élément de liaison (11).

4. Dispositif selon l'une quelconque des revendications 1 à 3, **caractérisé en ce que** l'axe de pivotement (9) du socle (8) par rapport à l'élément de liaison (11) est constitué par une vis (12) traversant le palier de support (10) et immobilisée vis-à-vis de celui-ci par un écrou de blocage (14).

5. Dispositif selon l'une quelconque des revendications 1 à 3, **caractérisé en ce que** l'axe de pivotement (9) du socle (8) est monté dans une ouverture du palier de support (10) et immobilisé dans celle-ci par encliquetage, en étant maintenu par un ressort plat à lame (17) en appui contre le fond du socle.

6. Dispositif selon l'une quelconque des revendications 1 à 3, **caractérisé en ce que** le socle (8) est muni d'un enjoliveur extérieur amovible.
